# EUROPEAN PATENT APPLICATION

(11) **EP 1 416 727 A1**
(43) Date of publication of application: **06.05.2004**
(21) Application number: 02354171.7
(22) Date of filing: 29.10.2002
(51) Int. Cl.: H04N 5/272

(54) **Moving virtual advertising**

(71) Applicant: Accenture Global Services GmbH, 8200 Schaffhausen (CH)
(72) Inventor: Stromme, Oyvind, 0571 Oslo (NO)
(74) Representative: de Beaumont, Michel

(57) **Abstract**

The invention concerns a method and system for generating a stream of video images such as, at the reception, in each current video image, a preregistered picture can be superimposed to a predetermined area of a moving object (C), comprising: providing a first set of views of said picture for various orientations thereof, and associating with each oriented view an identifying parameter; estimating in each video image the location, orientation and size of said area of said object; selecting the identifying parameter of the oriented view having the same orientation as said area in the current image; and transmitting with each current image the selected identifying parameter along with information on the location and size of said area.

## Description

### FIELD OF THE INVENTION

The present invention relates to a method and a system for broadcasting images of moving objects, especially video images, with insertion of advertisement pictures or the like on specific locations of the moving objects.

### BACKGROUND OF THE INVENTION

Systems for changing the content of advertisement pictures of broadcasted views are already known. For example, virtual reality systems superimpose adverts on predetermined static locations of a filmed area (for example, panels of a soccer or football stadium). Such systems are used, for advertising purposes, to modify the content of the advertisement depending on, for example, the country or the geographic area in which the images are broadcasted. The choice of the advertisement can be made in view of customer habits or legal aspects (for example, in some countries, tobacco or alcohol advertising is illegal).

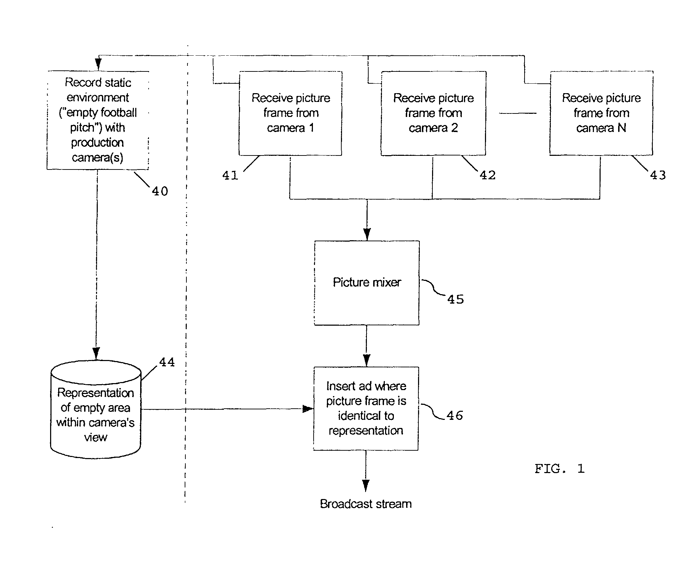

Figure 1 is a block diagram of a known method for superimposing panels on fixed locations of filmed areas.

A camera has a reference position that is recorded by a computer, which mixes the fixed advertisement, and the television picture. The fact that the camera has pan and tilt movements within a certain area also means that the computer knows the static environment by means of pre-registration. When the advertisement is to be imposed on, say, the middle circle of a football pitch, it is inserted on the static part of the TV picture that is visible. This is done to avoid putting the advertisement on the players, or on any other objects not belonging to the static environment.

The pre-registration phase of the static environment is shown to the left of the vertical dashed line in Figure 1. Using the football pitch as an example, cameras are panned and tilted so that all parts of the football pitch environment that can be captured (block 40) using camera lenses (blocks 41, 42, 43) are stored in a database 44 for use in the later broadcast. The advertisement boundaries are then indexed in the database representation of the football pitch for every position for all cameras.

Since the cameras move (pan and tilt) only within the boundary done in the registration phase, and the static environment is known, the advertisements can be inserted into the production stream. In Figure 1, this is shown as being inserted after the broadcast stream has been produced (block 45). Only the parts of the broadcast stream that are identical to the static representation of the football pitch are candidates for advertisement inserts (block 46). The positioning of the adverts are static with respect to the football pitch, and pixel boundaries in the representation lock the advertising image to a position on the pitch rather than the camera view.

The limitation of such systems is that the advertisements are fixed to certain points or areas in the camera views.

It would be desirable to be able to superimpose pictures (especially advertisement) not only on static areas (eventually filmed by moving cameras) but also on moving objects, for example, on cars in car races.

A first difficulty is that the main subject of the images (the subject followed by the camera) is the moving object on which one wants to add advertisements. On the contrary, in a stadium, the main subject is/are the player(s) and the panels of the stadium on which adverts are superimposed constitute a background. Further, the background is often larger than the subject, at least when an advertisement panel has to be understandable for the person watching. So, it is expected that the computation amount for tracking a moving object and superimposing an advertisement will be greater than for superimposing an advertisement to a large fixed background panel.

A second difficulty is that both the camera filming the object and the filmed object (for example a car) can move. This constitutes an additional factor increasing the amount of computation. In particular, in a system dedicated to static panels (for example, a stadium), the cameras are often fixed and just move in orientation. Further, only the roll and pitch and not the yaw can vary, which reduces the possible deformations of the predetermined pictures to be superimposed to the image of a fixed panel. Treating pictures provided by moving cameras (for example, located in a helicopter to film a car race) necessitates dealing with six degrees of freedom (three rectangular coordinates plus roll, pitch and yaw).

There is a technical problem in providing a method and a system for broadcasting moving images of moving objects taken by moving cameras and to superimpose various advertisement pictures on the filmed objects.

There is another technical problem for making the required computations in real time while broadcasting the views (for example, for a TV program in live).

### SUMMARY OF THE INVENTION

A purpose of the invention is to provide a method and a system for adding or superimposing predetermined pictures, especially advertisement pictures, on predetermined location(s) of moving object(s) in a video stream. More generally, the invention aims at superimposing, in a video stream, at least one predetermined image portion at a predetermined location of at least one moving object image, to simulate that the object carries the predetermined image portion on.

Another purpose of the present invention is to provide a real time image processing in a live broadcasting program.

Another purpose of the invention is to mix images taken by several moving cameras.

To attain these purposes and others, the present invention provides a method and a system for superimposing, in a video stream, an image portion representing a picture to be carried by an image of a moving object in which the image acquisition is disassociated from the insertion of the image portion.

According to the invention, at the beginning of a session (a TV program), a library of the pictures in various orientations is downloaded (broadcasted) in the video receiver (for example, the set top box of a TV set or the like). Then, along with the successive video images, only an identifying reference of the picture with a size and location indication is broadcasted, the superimposition being made on the receiver side.

According to a preferred embodiment of the invention, a geometrical representation of the moving object to which the system has to superimpose pictures is used so that the pictures can be correctly inserted in relation to a reference point on the object. This reference point is, according to the invention, the point of the object from which the position and orientation parameters are calculated. The position (location) of the object is preferably obtained by means of a conventional positioning system (for example, a GPS). The moving objects to be tracked by the system are identified along with their location. The orientation parameters of the object are preferably obtained with a conventional yaw, pitch and roll sensor attached to the reference point.

Using a reference point minimizes the required computation amount. Indeed, unless the object is deformed between two images (either because its orientation has changed or because the camera has being displaced), the position of the advertisement picture is constant in relation to the reference point for the car in the geometrical model.

Hence, according to a preferred embodiment, the determination of a location, orientation and size of an object in the current view is, if that object was already present in the former view, a differential determination.

The detection of the apparition of an object in a current view can be made by several ways.

According to a first embodiment, not only the moving objects to which superimposed pictures are localizable and identifiable by the system, but also static points of the filmed event place (for example, the race circuit). Hence, knowing the location of the moving objects, the static points and the camera taking the current image, the system detects, along with the size of the picture (depending on the zooming parameter of the camera) when a new object enters the field of the camera.

According to another embodiment, the system uses a shape recognition tool to detect the moving objects (for example the cars) on the basis on their geometrical representation to detect the presence of such objects in the current image.

### BRIEF DESCRIPTION OF THE DRAWINGS

The foregoing and others purposes, features, aspects and advantages of the invention will become apparent from the following detailed description of embodiments, given by way of illustration and not limitation with reference to the accompanying drawings.
Figure 1 already disclosed illustrates, very schematically, a conventional method for superimposing fixed panel on static locations of filmed areas;
Figure 2 is a block diagram of an embodiment of a system for superimposing pictures to images of moving objects;
Figure 3 is a flowchart of an embodiment of the method for operating the system of figure 2; and
Figure 4 is a block diagram illustrating an embodiment of the method according to the present invention.

Only the elements and steps useful to the understanding of the present invention have been shown in the drawings and will be disclosed hereafter. Especially, details of localizing the elements in a same referential are not disclosed. Further, details for calculating picture deformation using conventional picture processing tools and methods have not been disclosed as it will readily occur to one skilled in the art.

### DETAILED DESCRIPTION OF THE INVENTION

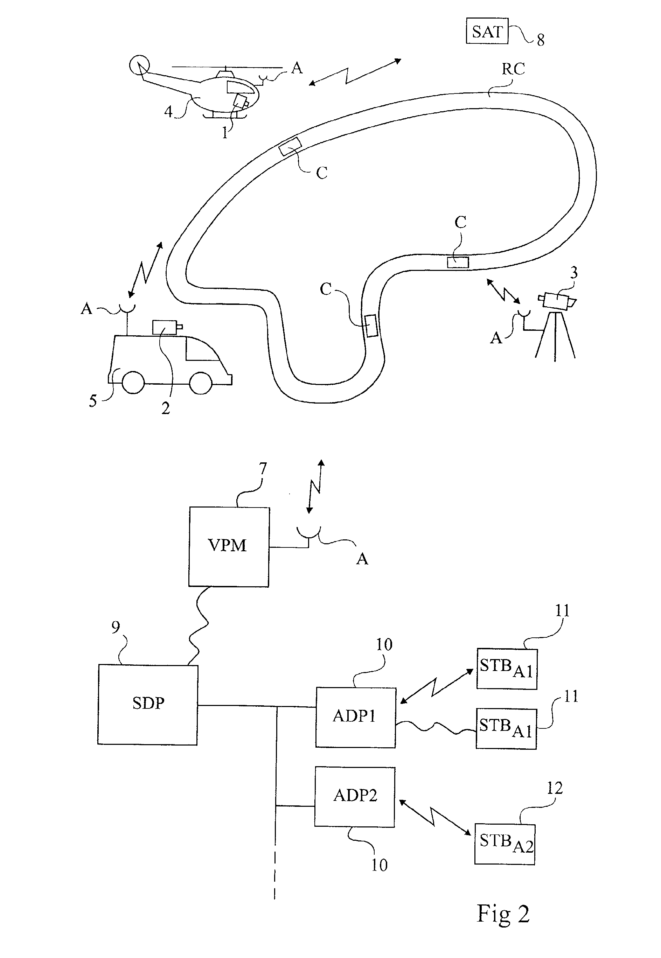

Figure 2 represents, very schematically, a system according to an embodiment of the present invention dedicated to film a car race.

At least one source of moving images films a race circuit RC and more specifically the cars C running on the circuit. In the example, three video cameras 1, 2 and 3 are respectively attached to a helicopter 4, a truck 5 and a pole 6. The image streams respectively taken by the cameras are, like in a conventional system, transmitted to a video production mixer 7 (VPM) either through wired (not shown) or wireless (antenna A) links, for example, through a satellite 8 (SAT). Each camera, more precisely each camera support (helicopter, truck, pole, etc.) is provided with a positioning system, for example a GPS or any other conventional system and, according to the invention, also with an orientation sensor.

The production mixer 7 transmits the mixed stream of images to at least one signal distribution point 9 (SDP) which distributes the image stream to several area distribution points 10 (ADP1, ADP2). In a conventional system, the signal distribution point or the area distributions points insert fixed advertisement pictures in each image (for example, panels of a stadium) before transmission (for example, broadcasting).

According to the present invention, the signal distribution point dispatch the image stream to several area distribution points 10 which transmit the images without modification to TV sets or the like, more precisely to Set Top Boxes 11 (STB_{A1}, STB_{A2}) of TV sets wire or wireless connected to the distribution points. According to the invention, the distribution points are not compulsorily area distribution points but can also be subject distribution points (for example, for thematic channels).

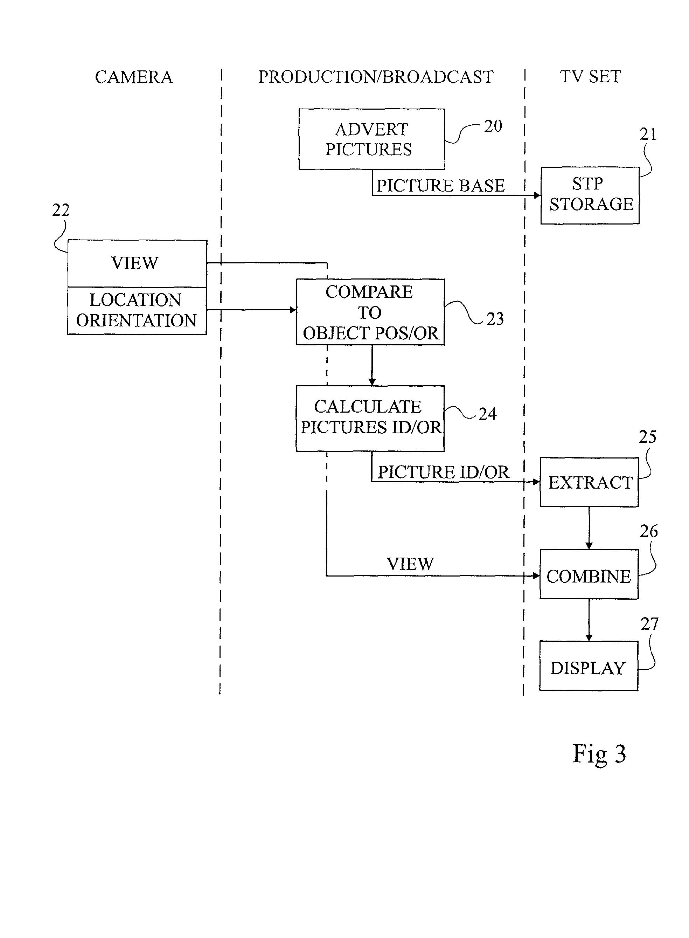

The operation of a system according to the present invention will be disclosed in connection with figure 3 which illustrates an embodiment of the method for superimposing pictures to moving images according to the invention.

Before broadcasting an image stream relating to an event (for example, a car race) to which advertisement pictures have to be added, advertisement pictures in various orientations are calculated (block 20, ADVERT PICTURES), taking into account their content and their location on the moving object of the scene (for example, a car). Preferably, the orientation is determined on the basis of a geometrical representation of the moving object with respect to a reference point of this object. At the end of this step, a library of advertisement views in various orientations is constituted. Each oriented picture view is stored along with its location from the reference point of the object and with an identifying reference.

Even if the speed of the moving object is very high (for example for a race car), since the repetition frequency of television frame is only 25 frames per second, the number of oriented picture views to be stored and to be calculated is limited. However, for determining the number of picture views to be calculated for each advertisement, one could take into account the range of speed of the moving object with respect to the image frequency

It should be noted that, even if the content of the advertisement varies, the shape and size of the picture on the moving object is often the same from an event to another. Hence, the above calculation based on a geometrical representation of the object (the car) can be made well in advance, and only once for a given car and a given advertisement, even if it is reused for different events.

Then, the set of picture views and associated identifying parameters (PICTURE BASE) are downloaded (for example, broadcasted) at the beginning of the TV program. The identifying parameters take into account the moving object to which the picture has to be affected in case more than one moving object is processed by the system. The picture base is stored (block 21, STP STORAGE) in the TV Set receiving the TV program and also in the production or broadcast side (for example, in the signal distribution point 9, or in area distribution points 10). Preferably, the picture base is stored in the set top box 11 of the TV set or of the digital decoder to which it is connected, which comprise calculation means.

According to the invention, when an image is taken by a camera filming an event, the position and orientation of the camera (bloc 22, VIEW - LOCATION ORIENTATION) are calculated and transmitted along with the image to the production mixer.

On the production (mixer) side, the position and orientation of the moving object (the car) is received through a positioning system. According to the invention, the moving objects which have to be processed to superimpose pictures are equipped not only with a positioning element but also with an orientation sensor. Indeed, to be able to determine the deformation of the picture, the location coordinates of the objects are not sufficient. The orientation coordinates (yaw, pitch and roll) are also required. Miniaturized sensor of yaw, pitch and roll are commonly available and the information can be transmitted by the moving object along with its location coordinates. The same information are required for each camera so that the system is able, on the video production mixer, to compare the respective location and orientation of the object to those of the camera in order to determine the eventual changes in orientation and in size of the object in the current image with respect to the former one.

It is possible to deduce, from the location of the reference point of the object and its orientation parameters (in a reference system), the eventual deformation of the pictures between the former and the current image. Further, knowing the difference of location of the reference point of the object between two successive images, it is easy to calculate the size variation of the picture between the two successive images.

The detection of a new object appearing in a current image depends on the adaptation of the place of the event to the system of the invention.

If the filmed place is not specifically adapted to the invention (for example, a car race on streets or a car rally), the system can just use the location and orientation of the cameras and of the moving object to be processed. Then, the moving objects in the images are preferably detected with a shape recognition tool using geometrical representation of the objects.

According to another embodiment, more particularly adapted to circumscribed event places (for example, car circuits); the place is provided with static localizable points regularly distributed on the place. Then, the supplemental information on the location of the moving objects with respect to these static points allows the detection of the apparition of a new object in a current image.

Having determined the location and orientation of the pictures which should be present in the current image, the system (on the broadcast/production side) determines the oriented picture (by comparison with the set of preregistered oriented pictures) and the corresponding picture identifying parameters (comprising their respective orientations) and transmits, along with the image, the identifying parameter of the advertisement picture and the respective location and size information.

On the receiver (TV set) side, the identifying parameter is used to extract from a memory, the respective oriented picture (block 25, EXTRACT).

Then, the oriented picture is combined (superimposed) to the current video image in the right position (block 26, COMBINE) and the images are finally displayed (block 27, DISPLAY).

According to a first simplified embodiment where the signal distribution point 9 and area distribution points 10 are mingled with the video picture mixer, the production/broadcast side calculates and transmits the complete information concerning the picture (i.e. the complete identifying parameters).

According to another embodiment, more particularly concerned with a system as represented in figure 2 in which the area distribution points are distinct from the point (video picture mixer 7 or signal distribution point 9) processing the steps 23/24, only the frame, i.e. orientation of the picture is transmitted without identifying the content thereof. Then, at the area distribution points 10, the content identifying reference is combined with the information received concerning the shape, orientation and location of the picture.

An advantage of the present invention is that the content of a picture on a moving object can be adapted to the broadcasting area or other requirements.

Another advantage of the present invention is that the superimposition of pictures is compatible with a real time calculation for live program.

The practical implementation of the invention is in the ability of one with an ordinary skill in the art on the basis of the functional indications above. Especially, the moving objects usually carry more than one picture and the present disclosure made in connection with one picture extends to any number of pictures and any number of moving objects, provided that the pictures and the moving objects are locatable with respect to each other.

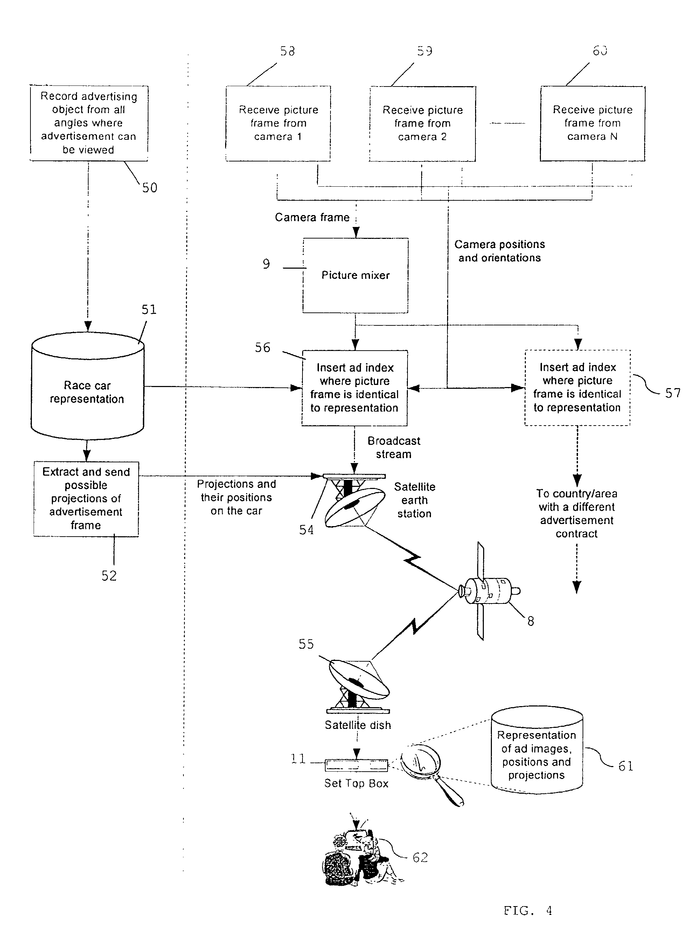

Figure 4 represents a block diagram of an exemplary embodiment of the present invention. Figure 4 outlines the differences with respect to a conventional system as shown in Figure 1.

Instead of capturing the area where the event takes place, as in the existing method, the object - in our example a racecar - is filmed (block 50) from as many directions and projections as necessary in order to project the advertising image on the required spot, and keep it there as if it was static. These projections are then stored in a main database 51 (shown to the left of the dashed line in Figure 4), and also extracted (block 52) and transmitted in advance of the car race to the set top box 11 of the user to avoid repeat transmission of the same images. The transmission occurs, for example through a satellite 8 (and earth base station 54 and receiver dish 55) Hence, the database shown as "magnified" (block 61) contains the necessary advertisement projections before the car race starts.

When the race is running the advertisements will be inserted only in the designated spots on the car when nothing is blocking the camera view of the insertion spot. This is done in the same way as the previous method by comparing (block 56 or 57) the stored camera view of the car with the current camera view selected by the mixer 9 among the camera views received 58, 59, 60 from the various cameras. The position of the cameras and the car are obtained using GPS (assuming land-based radio support to improve accuracy), and the orientation is obtained using accelerometers and/or gyroscopes inside each object. By combining this information a mathematical equation can express whether or not the current camera view has an advertisement spot or not. This does not take into account the previously mentioned obstructions that may be between the camera and the car, which therefore has to be tested manually by pixel comparisons.

The only information thus needed while the race is running are an identifier of the advertisement, and an orientation index to identify which projection of the advertisement image should be placed on the car. Should any obstructions cover the advertisement spot wholly or partly, a polygon representation can be calculated to mark the boundaries of the obstructing object, and sent along with the advertisement representation.

When the advertisement representation is received by the viewer's set top box, indexes are used to look up the database 61 of advertisement image projections, and insert the appropriate image into the video stream to be watched on TV 62. In the case of an obstruction, the polygon representation of the boundaries of the obstructing object has to be translated to image pixel boundaries, and the part of the advertisement that is obstructed will not be inserted in the video stream.

The dashed box 57 in Figure 4 designates the broadcast to e.g. a different country, or area where e.g. tobacco and alcohol advertisements are illegal, or where different advertising contracts have been signed. The same broadcast elements are used in this instance. However, they are left out here for space reasons. The difference is in the dashed box 57, which inserts and sends different advertisement images than the other broadcast chain.

A further possible method is to change the advertisement imagery during the race. Usually, more people watch the start and the end of a car race. As long as the images have the same boundaries, changing their pixel content is a minor issue, and this can be solved by e.g. downloading a double set of images to the set top box before the start of the race.

Having thus described at least one illustrative embodiment of the invention, various alterations, modifications and improvements will readily occur to those skilled in the art. Such alteration, modification, and improvements are intended to be within the spirit and scope of the invention. Accordingly, the foregoing description is by way of example only and is not intended to be limiting. In particular, what has been disclosed in connection with car races can applies to other fields of application in which moving objects carrying advert pictures or the like are filmed. Further, the implementation of the invention with hardware/software components is in the ability of those with an ordinary skill in the art using known tolls. The invention is limited only as defined in the following claims and the equivalent thereto.

## Claims

1. A method for generating a stream of video images such as, at the reception, in each current video image, a preregistered picture can be superimposed to a predetermined area of a moving object (C), comprising:
providing (20) a first set of views of said picture for various orientations thereof, and associating with each oriented view an identifying parameter;
estimating (22) in each video image the location, orientation and size of said area of said object;
selecting (23) the identifying parameter of the oriented view having the same orientation as said area in the current image; and
transmitting (24) with each current image the selected identifying parameter along with information on the location and size of said area.

2. A method for superimposing, in a received video stream generated according to claim 1, a preregistered picture on a predetermined area of the image of a moving object (C), comprising:
downloading (21) at least one second set of views of said picture, corresponding to said first set of views ; and for each image:
extracting (25) the identifying parameter and the size and location information;
selecting, from said second set of views, an oriented picture in accordance with the identifying parameter;
computing a scaled picture on the basis of said size information; and
superimposing (26) said scaled picture in the current image at a location corresponding to the location information.

3. The method of claim 2, in which at the beginning of a TV program to be transmitted, said second set of views is downloaded in video receivers (11, 12).

4. The method of claim 2, in which said second set of views is identical to said first set of views.

5. The method of claim 1, in which said first set of views contains only picture frames.

6. The method of claim 2, applied to a received video stream generated according to claim 5, in which said second set of views contains picture frames of same orientation of said first set of views, with a picture content.

7. The method of claim 2, in which the content of said second set of views depends upon the geographic broadcasting zone.

8. The method of claim 1, in which the location and orientation information in a current image are calculated (22) for a reference point of the object (C).

9. The method of claim 1, in which, in a current image, the location, orientation and size of an object (C) are provided (22) in a differential way with respect to a former image.

10. The method of claim 1, in which static points of an image are localizable to detect when a new object (C) comes into a next image.

11. The method of claim 1 using shape recognition tools to detect the presence of the moving object (C) in the current image on the basis on a stored geometrical representation.

12. A system for generating a stream of video images to be broadcasted such as, at the reception, in each current video image, a preregistered picture can be superimposed on a predetermined area of a moving object (C), comprising:
at least one input for video images;
a calculator for providing a set of views of said picture for various orientations and associating with each oriented view an identifying parameter;
a memory for containing said set of views;
an estimator of the location, orientation and size of said area of said object in each video image;
a selector for selecting, among said set of views, an oriented picture having the same orientation than said area in the current image, and providing the associated identifying parameter; and
a generator of a video stream in which, each image containing said area is attached to the selected identifying parameter along with location and size information of said area.

13. A video receiver (11, 12) adapted to receive images from the system of claim 12, comprising:
memory for containing said set of views;
an extractor for extracting from said memory an oriented picture on the basis of an identifying parameter attached to each image of the video stream; and
a calculator of a scaled picture on the basis of size information attached to each image in the video stream, and for superimposing said scaled picture in the current image at the location corresponding to said location information.
